# EUROPÄISCHE PATENTSCHRIFT

(11) **EP 1 324 902 B1**
(45) Veröffentlichungstag und Bekanntmachung des Hinweises auf die Patenterteilung: **04.05.2005**
(21) Anmeldenummer: 01982367.3
(22) Anmeldetag: 26.09.2001
(51) Int. Cl.: B60T 7/04, B60T 8/40

(54) **BETÄTIGUNGSWEGSIMULATOR FÜR EINE FAHRZEUGBETÄTIGUNGSEINRICHTUNG**
ACTUATING TRAVEL SIMULATOR FOR A VEHICLE ACTUATING UNIT
SIMULATEUR DE COURSE D'ACTIONNEMENT POUR UNE UNITE D'ACTIONNEMENT DE VEHICULE

(30) Priorität: 27.09.2000 DE 10049094; 31.10.2000 DE 10053994
(43) Veröffentlichungstag der Anmeldung: 09.07.2003
(73) Patentinhaber: Continental Teves AG & Co. OHG, 60488 Frankfurt am Main (DE)
(72) Erfinder: GIERS, Bernhard, 60320 Frankfurt/Main (DE)
(86) Internationale Anmeldenummer: PCT/EP2001/011163
(87) Internationale Veröffentlichungsnummer: WO 2002/026538

(56) Entgegenhaltungen:
- EP-A- 0 075 657
- US-A- 4 555 766
- US-A- 5 560 688

## Beschreibung

Die Erfindung betrifft einen Betätigungswegsimulator für eine Fahrzeugbetätigungseinrichtung.

Mechanische oder mechanisch/hydraulische Betätigungswegsimulatoren für Fahrzeugbetätigungseinrichtungen, im folgenden auch kurz "Simulatoren" genannt, sind z.B. bei Fahrzeugbremsanlagen bekannt. Bei diesen Simulatoren wirkt die vom Fahrer aufgebrachte Bremskraft auf einen Simulatorkolben, der sich auf ein elastische Mittel, z.B. auf eine Stahlfeder, abstützt. So wird auf mechanischem Weg der von den marktüblichen hydraulischen Bremssystemen bekannte Zusammenhang zwischen Pedalweg und dazu aufgebrachter Kraft nachgebildet.

Derartige Betätigungswegsimulatoren, wie z.B aus WO-A-98 14355 bekännt, werden bei Brake-By-Wire-Fahrzeugbremsanlagen, wie bei einer elektrohydraulischen Bremse (EHB) oder einer elektromechanischen Bremse (EMB), eingesetzt, bei denen das Bremspedal von den Radbremsen im Normalbremsfall entkoppelt ist, der Fahrerbremswunsch mit Hilfe von Sensoren erfaßt wird und einer elektronischen Einheit zugeführt wird, welche die Druckbeaufschlagung der einzelnen Radbremsen steuert. Die Energie für den Bremsdruck wird durch eine Fremdenergiequelle bereitgestellt und der Bremsdruck wird durch hydraulische Aktuatoren (EHB) oder elektromechanische Aktuatoren (EMB) erzeugt. Das für den Fahrer gewohnte Pedalgefühl wird durch Betätigungswegsimulatoren erzeugt, die dem Fahrer ein gegenüber herkömmlichen hydraulischen Bremsanlagen im wesentlichen unverändertes Pedalgefühl vermitteln.

Es ist die Aufgabe der vorliegenden Erfindung, einen Betätigungswegsimulator und ein Verfahren zur Simulation einer definierten Betätigungswegcharakteristik bereitzustellen.

Diese Aufgabe wird erfindungsgemäß durch die kennzeichnenden merkmale gelöst.

Darüber hinaus ist es vorgesehen, daß der Betätigungswegsimulator im Notfall (Ausfall einer elektronischen Bremsensteuerung bzw. Stromausfall) als ein hydraulischer Notdruckgeber einsetzbar ist.

Unter dem Begriff "Simulatorkolben" ist hier nicht notwendigerweise ein bei den bekannten Systemen eingesetzter Kolben zu verstehen, der als Medientrenner dient. Vielmehr bewirkt der Simulatorkolben im Sinne der Erfindung als ein hydraulischer Kolben direkt eine Änderung des Fluidvolumens in der Simulatorkammer.

Es ist vorgesehen, daß dem Betätigungswegsimulator ein vorzugsweise druckloser Vorratsbehälter für das hydraulische Fluid zugeordnet ist, der mit der Simulatorkammer über eine erste hydraulisch Leitung verbunden ist, in der ein erstes Einstellmittel, vorzugsweise ein erstes Ventil, angeordnet ist.

Erfindungsgemäß ist dem Betätigungswegsimulator eine Druckquelle für das hydraulische Fluid zugeordnet, vorzugsweise ein Hochdruckspeicher, die mit der Simulatorkammer über eine zweite hydraulische Leitung verbunden ist, in der ein zweites Einstellmittel, vorzugsweise ein zweites Ventil, angeordnet ist.

Das erste und/oder das zweite Ventil ist vorzugsweise ein stromlos geschlossenes (SG) Ventil. Es können Analogventile, analogisierte Schaltventile oder Schaltventile, insbesondere 3/2-Wegeventile, eingesetzt werden, vorzugsweise aber Analogventile oder analogisierte Schaltventile.

Die Steuerung des Systems erfolgt vorteilhaft durch eine elektronische Steuereinheit, z.B. ein übliches Microkontrollersystem oder ein System von digitalen Signalprozessoren. Um dem Fahrer eine direkte Betätigungswegzuordnung nach einer Betätigungskraftänderung zu liefern, erfolgt eine rasche Nachführung der Zuordnung Betätigungskraft zu Betätigungsweg, z.B. im Kilohertzbereich. Diese Nachführung wird durch eine entsprechende Ansteuerung des ersten und/oder zweiten Ventils durch die elektronische Steuereinheit erreicht. Wird die Betätigungseinrichtung vom Fahrer mit Kraft beaufschlagt, wird durch eine geeignete Ventilbetätigung des ersten und/oder zweiten Ventils das Volumen in der Simulatorkammer so eingestellt, daß für den Fahrer der gewünschte Zusammenhang zwischen Betätigungskraft und Betätigungsweg hergestellt ist. Dabei können auch Nichtlinearitäten zwischen Betätigungskraft und Betätigungsweg dargestellt werden. Ebenso ist eine Nachbildung von Reibungseffekten möglich.

Erfindungsgemäß ist dem Betätigungswegsimulator eine Einrichtung zum Ermitteln einer durch den Fahrer auf die Betätigungseinrichtung aufgebrachten Betätigungskraft und eine elektronische Steuereinheit zugeordnet, die nach Maßgabe der ermittelten Betätigungskraft die Einstellmittel steuert. Die auf die Betätigungseinrichtung durch den Fahrer aufgebrachte Betätigungskraft wird z.B. durch mindestens einen der Simulatorkammer zugeordneten Drucksensor und/oder einen an der Betätigungseinrichtung angeordneten Kraftsensor oder Wegsensor erfaßt und es wird ein nach Maßgabe des erfaßten Drucks und/oder der erfaßten Kraft entsprechender Druck in der Simulatorkammer eingestellt.

Nach der Erfindung ist es vorgesehen, daß der Betätigungswegsimulator einem Fahrzeugbremssystem zugeordnet ist, mit Radbremsen, die mit Druck aus der Druckquelle beaufschlagbar sind und die über mindestens eine mittels eines Trennventils absperrbare hydraulische Verbindung mit der hydraulischen Simulatorkammer verbindbar sind. Der erfindungsgemäße Betätigungswegsimulator ist daher insbesondere für elektrohydraulische Bremsanlagen (EHB) geeignet.

Bekannte elektrohydraulische Bremsanlagen weisen im Grundsatz einen Hauptzylinder und mindestens eine Fremddruckquelle, z.B. eine Motor-Pumpen-Einheit mit Hochdruckspeicher, auf, die durch eine Steuereinheit ansteuerbar ist und mit deren Druck Radbremsen des Fahrzeugs beaufschlagbar sind. Diese Bremsanlagen weisen ferner eine Einrichtung zur Erkennung des Fahrerverzögerungswunsches sowie mindestens ein der Fremddruckquelle zugeordnetes Ventil auf, das eine Einstellung des von der Pumpe erzeugten Druckes gemäß dem Fahrerbremswunsch ermöglicht.

Bei den bekannten EHB-Systemen sind die Radbremsen über mindestens eine mittels eines Trennventils absperrbare hydraulische Verbindung mit dem Hauptzylinder verbindbar, um bei einem Ausfall der Fremddruckquelle die Radbremsen mit Muskelkraft des Fahrers zu betreiben. Der Hauptzylinder wirkt dann als ein Notbremsdruckgeber (hydraulischer Durchgriff).

Im Sinne der Erfindung ersetzt der erfindungsgemäße Betätigungswegsimulator in diesem System den Hauptzylinder der Bremsanlage. Das Fluid wird gemäß der Erfindung aus der Druckquelle der EHB in den hydraulischen Zylinder des Betätigungswegsimulators zurückgeführt zur Einstellung der gewünschten Betätigungswegcharakteristik. Erfindungsgemäß übernimmt der Betätigungswegsimulator so die eigentliche Funktion des Simulators (Aufprägung einer bestimmten Kraft-Weg-Charakteristik) und zusätzlich die Funktion des Hauptzylinders als Notbremsdruckgeber für das EHB-System.

Die Aufgabe wird ferner dadurch gelöst, daß bei einem Verfahren zur Einstellung einer definierten Kraft-Weg-Charakteristik einer Betätigungseinrichtung für eine Fahrzeugbremsanlage, insbesondere Kraftfahrzeugbremsanlage, mittels eines Betätigungswegsimulators, der einen hydraulischen Simulatorkolben aufweist, der durch eine Betätigung der Betätigungseinrichtung verschiebbar ist und angeordnet ist in einer hydraulischen Simulatorkammer, in der ein hydraulisches Fluid angeordnet ist, die Kraft-Weg-Charakteristik der Betätigungseinrichtung durch ein gesteuertes Wegführen oder Zuführen von hydraulischem Fluid aus der Kammer heraus oder in die Kammer hinein erfolgt.

Das Verfahren beruht darauf, daß zum Beispiel bei einer Betätigung eines Bremspedals, das über ein Stellmittel, beispielsweise eine Stange, in Wirkverbindung mit dem Simulatorkolben steht, der Simulatorkolben in der Simulatorkammer verschoben wird, wodurch Fluidvolumen direkt aus der Simulatorkammer verdrängt wird und daß dieses direkte Verdrängen von Fluid aus der Simulatorkammer durch geeignete Einstellmittel so gesteuert wird, daß sich eine gewünschte, vorgegebene Kraft-Weg-Charakteristik einstellt. Wird in diesem Fall das Bremspedal wieder losgelassen, so wird in analoger Weise eine Zufuhr von Fluid in die Simulatorkammer gesteuert. Im Grunde wird die Kraft-Weg-Charakteristik der Betätigungseinrichtung so in Abhängigkeit von einem aus der Simulatorkammer direkt verschobenen Fluidvolumen eingestellt.

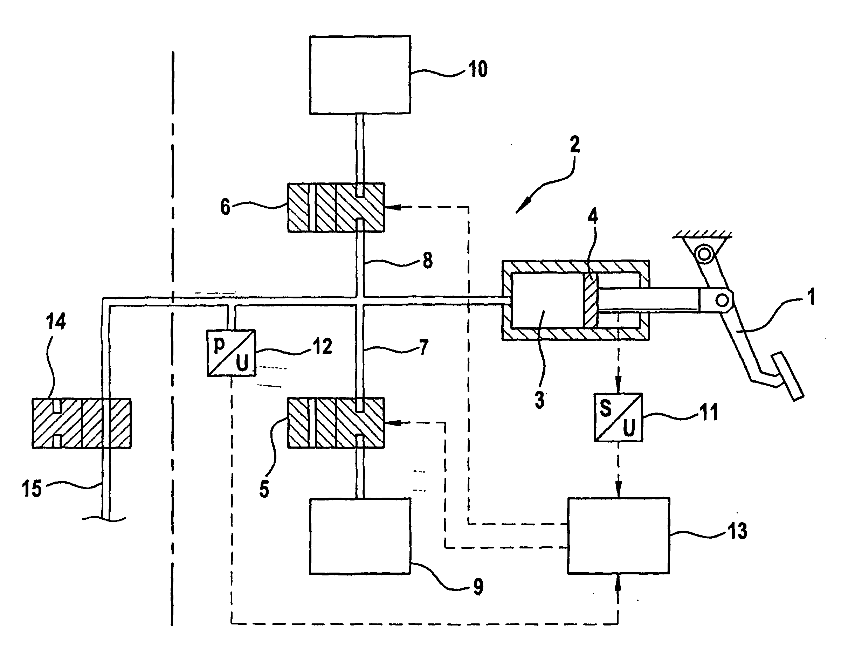

Die Erfindung wird nun anhand der Zeichnung (Fig.) beispielhaft näher erläutert.

Die Fig. zeigt schematisch eine Ausführungsform des erfindungsgemäßen Simulators für eine elektrohydraulische Bremse (EHB).

Diese Bremsanlage ist im Grundsatz wie eine bekannte EHB aufgebaut, bei der der Hauptzylinder und der Simulator durch den erfindungsgemäßen Simulator (mit zugeordneten Ventilen und hydraulischen Verbindungen) ersetzt wurde.

Bei einer Kraftbeaufschlagung des Bremspedals 1 wird der Simulatorkolben 4 in der Simulatorkammer 3 des Simulators 2 verschoben. Durch eine Betätigung des ersten Ventils 5 (Druckabbauventil) wird Druck aus der Simulatorkammer 3 abgebaut und Fluidvolumen aus der Simulatorkammer 3 über die erste Leitung 7 in den Fluidvorratsbehälter 9 entlassen. Bei einer Reduzierung der Betätigungskraft wird das zweite Ventil 6 (Druckaufbauventil) angesteuert, damit Fluidvolumen aus dem Druckspeicher 10 über eine zweite Leitung 8 in die Simulatorkammer 3 zurückströmt. Die Steuerung der Ventile 5,6 erfolgt durch eine elektronische Steuereinheit 13 (gestrichelte Pfade in der Fig.), nach Maßgabe von Signalen eines Betätigungswegsensors 11 und eines Drucksensors 12 (gestrichelte Pfade in der Fig.). Durch den Betätigungswegsensor 11 ist eine Regelabweichung direkt meßbar. Die elektronische Steuereinheit 13 kann so die Ansteuerung zum Erreichen eines bestimmten Fluid-Nennvolumens in der Simulatorkammer 3 direkt einregeln. Mit Hilfe eines Trennventils 14 in einer hydraulischen Leitung 15 ist die Verbindung zu den Radbremsen abtrennbar. Das Trennventil 14 ist vorzugsweise ein stromlos offenes Ventil, um eine Notbremsfunktion mit Fahrerfußkraft bei einem Ausfall der Hilfsenergiequelle sicherzustellen. Der Simulator 2 wirkt in diesem besonderen Betriebsfall wie ein bekannter Hauptzylinder als Notbremsdruckgeber.

Während einer normalen Betriebsbremsfunktion der EHB ist das Trennventil 14 geschlossen und der Simulator 2 erfüllt die an sich bekannten Simulatorfunktionen für das EHB-System. Die Einzelheiten der hydraulischen Schaltung (im Anschluß links von der gestrichpunkteten Linie A) und Funktionsweise einer EHB sind dem Fachmann hinlänglich bekannt und werden hier nicht weiter dargestellt.

Der Zusammenhang zwischen Betätigungskraft und Betätigungsweg ist situationsbedingt veränderbar. Dieses ist sinnvoll, um dem Fahrer bestimmte Systemzustände zu signalisieren. Ist z.B. ein Luftvolumen in einem elektrohydraulischen Bremssystem erkannt worden, so kann dieses dem Fahrer in der Zuordnung Betätigungskraft und Betätigungsweg signalisiert werden. Daß bedeutet, es wird eine Nachbildung des Betätigungswegverhaltens "Luft im Bremssystem" simuliert, wobei das Betätigungswegverhalten dem einer bekannten hydraulischen Bremsanlage nachgebildet werden kann oder aber gegenüber diesem bekannten Verhalten abgeschwächt oder verstärkt werden kann.

Mit Hilfe der Erfindung kann der bekannte mechanisch bzw. hydraulisch/mechanische Simulator ersetzt werden, indem der Fahrerbremswunsch gemessen wird, z.B. über die Betätigungskraft, und indem nach Maßgabe des Fahrerbremswunsches der Druck des Fluids in der Simulatorkammer 3 so gesteuert wird, daß ein der Betätigungskraft des Fahrers zugeordneter Betätigungsweg eingestellt wird und der Betätigungseinrichtung 1 eine definierte Kraft-Weg-Charakteristik aufgeprägt wird.

Zusammenfassend weist die Erfindung die folgenden Vorteile auf:

Da die Rückmeldung zum Fahrer direkt durch die elektronische Steuereinheit 13 eingestellt wird, ist die Funktion des Systems für den Fahrer überwachbar. Denn Störungen der Sensorik führen zu einer falschen Zuordnung von Kraft zu Weg.

Reibung innerhalb der Betätigung ist unkritisch, da die relativ große Energie eines Hochdruckspeichers 10 zusammen mit der Ansteuerung über z.B. Analogventile diese Reibung überwindet.

Das Verhalten des Simulators 2 ist über Parameter innerhalb eines Software-Programms der elektronischen Steuereinheit 13 leicht veränderbar. Daher sind eine Reproduzierbarkeit und freie Gestaltung der Kraft-Weg-Kennlinien oder eine situationsabhängige Änderung leicht möglich. Das erfindungsgemäße System ist den mechanischen Systemen hinsichtlich dieser Flexibilität überlegen.

Der für den Simulator 2 benötigte Bauraum ist geringer als der Bauraum für einen mechanischen Simulators mit einer Feder. Der erfindungsgemäße Simulator beansprucht im Grundsatz keinen Bauraum im Fahrerfußraum des Fahrzeugs.

Eine hydraulische Drosselung zwischen der Simulatorkammer 3 und den Ventilen 5,6, kann bei der Erfindung über die hohe verfügbare Energie ausgeglichen werden.

Bei einem Ausfall der Stromversorgung ist eine Volumenverschiebung aus der Simulatorkammer 3 in den Fluidvorratsbehälter 9 oder den Druckspeicher 10 nicht möglich, da die (SG)-Ventile 5,6 geschlossen sind. In der hydraulischen Rückfallebene eines EHB-Systems steht das Volumen der Simulatorkammer 3 daher vollständig für eine Bremsung zur Verfügung, ohne daß wegabhängige Ventile in der Simulatorkammer dafür notwendig sind.

### Bezugszeichenliste:

- 1: Betätigungspedal
- 2: Simulator
- 3: Simulatorkammer
- 4: Simulatorkolben
- 5: erstes Ventil
- 6: zweites Ventil
- 7: erste Leitung
- 8: zweite Leitung
- 9: Fluidvorratsbehälter
- 10: Druckquelle
- 11: Wegsensor
- 12: Drucksensor
- 13: Steuereinheit
- 14: Trennventil
- 15: hydraulische Leitung

## Patentansprüche

1. Betätigungswegsimulator für eine Fahrzeugbetätigungseinrichtung, vorzugsweise ein Bremspedal, der einen hydraulischen Simulatorkolben (4) in einer hydraulischen Simulatorkammer (3) aufweist, in der ein hydraulisches Fluid angeordnet ist, **dadurch gekennzeichnet, daß** die Simulatorkammer (3) mindestens eine Öffnung aufweist, über die Fluid bei einer Betätigung der Fahrzeugbetätigungseinrichtung aus der Simulatorkammer weggeführt oder zugeführt wird, daß Einstellmittel (5,6) vorgesehen sind, um das aus der Simulatorkammer (3) weggeführte und/oder der Simulatorkammer zugeführte Fluidvolumen zu steuern, und daß die Kraft-Weg-Charakteristik der Betätigungseinrichtung durch das gesteuerte Wegführen oder Zuführen von hydraulischem Fluid aus der Kammer (3) heraus oder in die Kammer hinein eingestellt wird.

2. Betätigungswegsimulator nach Anspruch 1,
**dadurch gekennzeichnet, daß** dem Betätigungswegsimulator ein vorzugsweise druckloser Vorratsbehälter (9) für das hydraulische Fluid zugeordnet ist, der mit der Simulatorkammer (3) über eine erste hydraulisch Leitung (7) verbunden ist, in der ein erstes Einstellmittel (5), vorzugsweise ein erstes Ventil, angeordnet ist.

3. Betätigungswegsimulator nach Anspruch 1 oder 2,
**dadurch gekennzeichnet, daß** dem Betätigungswegsimulator eine Druckquelle (10) für das hydraulische Fluid zugeordnet ist, vorzugsweise ein Hochdruckspeicher, die mit der Simulatorkammer (3) über eine zweite hydraulische Leitung (8) verbunden ist, in der ein zweites Einstellmittel (6), vorzugsweise ein zweites Ventil, angeordnet ist.

4. Betätigungswegsimulator nach einem der Ansprüche 1 bis 3,
**dadurch gekennzeichnet, daß** das erste und/oder das zweite Ventil (5,6) ein stromlos geschlossenes (SG) Ventil, vorzugsweise ein Analogventil oder ein analogisiertes Schaltventil ist.

5. Betätigungswegsimulator nach einem der Ansprüche 1 bis 4,
**dadurch gekennzeichnet, daß** dem Betätigungswegsimulator eine Einrichtung zum Ermitteln einer durch den Fahrer auf die Betätigungseinrichtung aufgebrachten Betätigungskraft und eine elektronische Steuereinheit (13) zugeordnet ist, die nach Maßgabe der ermittelten Betätigungskraft die Einstellmittel steuert.

6. Betätigungswegsimulator nach einem der Ansprüche 1 bis 5,
**dadurch gekennzeichnet, daß** der Betätigungswegsimulator einem Fahrzeugbremssystem zugeordnet ist, mit Radbremsen, die mit Druck aus der Druckquelle beaufschlagbar sind und die über mindestens eine mittels eines Trennventils (14) absperrbare hydraulische Verbindung mit der hydraulischen Simulatorkammer verbindbar sind.

7. Verfahren zur Einstellung einer definierten Kraft-Weg-Charakteristik einer Betätigungseinrichtung für eine Fahrzeugbremsanlage mittels eines Betätigungswegsimulators, der einen hydraulischen Simulatorkolben (4) aufweist, der durch eine Betätigung der Betätigungseinrichtung verschiebbar ist und angeordnet ist in einer hydraulischen Simulatorkammer (3), in der ein hydraulisches Fluid angeordnet ist,
**dadurch gekennzeichnet, daß** die Kraft-Weg-Charakteristik der Betätigungseinrichtung durch ein gesteuertes Wegführen oder Zuführen von hydraulischem Fluid aus der Kammer (3) heraus oder in die Kammer hinein eingestellt wird.

8. Betätigungswegsimulator nach einem der Ansprüche 1 bis 6 oder Verfahren nach Anspruch 7,
**dadurch gekennzeichnet, daß** der Betätigungswegsimulator oder das Verfahren für eine Einstellung einer definierten Kraft-Weg-Charakteristik eines Kraftfahrzeugbremspedals (1) verwendet wird.

9. Betätigungswegsimulator oder Verfahren nach einem der Ansprüche 1 bis 8,
**dadurch gekennzeichnet, daß** der Betätigungswegsimulator die Funktion eines Notbremsdruckgebers erfüllt.

## Claims

1. Actuating travel simulator for a vehicle actuating unit, preferably a brake pedal, which simulator includes a hydraulic simulator piston (4) in a hydraulic simulator chamber (3) containing a hydraulic fluid,
**characterized in that** said simulator chamber (3) includes at least one opening through which fluid is discharged from or supplied to the simulator chamber when the vehicle actuating unit is actuated, **in that** adjusting means (5, 6) are provided to control the fluid volume discharged from the simulator chamber (3) and/or supplied to the simulator chamber, and **in that** the force-travel characteristic curve of the actuating unit is adjusted by means of the controlled discharge or supply of hydraulic fluid out of the chamber (3) or into said chamber.

2. Actuating travel simulator as claimed in claim 1,
**characterized in that** associated with the actuating travel simulator is a preferably non-pressurized supply reservoir (9) for the hydraulic fluid, said reservoir being connected to the simulator chamber (3) by way of a first hydraulic line (7) in which a first adjusting means (5), preferably a first valve, is arranged.

3. Actuating travel simulator as claimed in claim 1 or 2,
**characterized in that** a pressure source (10) for the hydraulic fluid, preferably a high-pressure accumulator, is associated with the actuating travel simulator, said pressure source being connected to the simulator chamber (3) by way of a second hydraulic line (8) in which a second adjusting means (6), preferably a second valve, is arranged.

4. Actuating travel simulator as claimed in any one of claims 1 to 3,
**characterized in that** the first and/or the second valve (5, 6) is a normally closed (NC) valve, preferably an analog valve or an analogized on/off valve.

5. Actuating travel simulator as claimed in any one of claims 1 to 4,
**characterized in that** a device for determining an actuating force, which the driver applies to the actuating unit, and an electronic control unit (13) is associated with the actuating travel simulator, said electronic control unit controlling the adjusting means according to the actuating force determined.

6. Actuating travel simulator as claimed in any one of claims 1 to 5,
**characterized in that** the actuating travel simulator is associated with a vehicle brake system, including wheel brakes that can be acted upon by pressure from the pressure source and are connectable to the hydraulic simulator chamber by way of at least one hydraulic connection closable by means of a separating valve (14).

7. Process for adjusting a defined force-travel characteristic curve of an actuating unit for a vehicle brake system by means of an actuating travel simulator having a hydraulic simulator piston (4) that is slidable by way of an actuation of the actuating unit and is arranged in a hydraulic simulator chamber (3) containing a hydraulic fluid,
**characterized in that** the force-travel characteristic curve of the actuating unit is adjusted by a controlled discharge or supply of hydraulic fluid out of the chamber (3) or into said chamber.

8. Actuating travel simulator as claimed in any one of claims 1 to 6 or process as claimed in claim 7,
**characterized in that** the actuating travel simulator or the process is used for adjusting a defined force-travel characteristic curve of an automotive vehicle brake pedal (1).

9. Actuating travel simulator or process as claimed in any one of claims 1 to 8,
**characterized in that** the actuating travel simulator performs the function of an emergency braking pressure generator.

## Revendications

1. Simulateur de course d'actionnement pour un dispositif d'actionnement de véhicule, de préférence une pédale de frein, qui comporte un piston hydraulique de simulateur (1) dans une chambre (3), hydraulique de simulateur dans laquelle est disposé un fluide hydraulique, **caractérisé en ce que** la chambre (3) du simulateur comporte au moins une ouverture, par laquelle un fluide s'évacue de la chambre du simulateur ou y est amené lors d'un actionnement du dispositif d'actionnement du véhicule, que des moyens de réglage (5, 6) sont prévus pour commander le volume de fluide évacué de la chambre (3) du simulateur et/ou envoyé à la chambre du simulateur, et que la caractéristique force - course du dispositif d'actionnement est réglée par l'évacuation commandé du fluide hydraulique à partir de la chambre (3) ou par l'amenée commandée du fluide hydraulique dans la chambre.

2. Simulateur de course d'actionnement selon la revendication 1, **caractérisé en ce qu'**au simulateur de course d'actionnement est associé un réservoir (9) de préférence sans pression pour le fluide hydraulique, qui est relié à la chambre (3) du simulateur par l'intermédiaire d'une première canalisation hydraulique (7), dans laquelle est disposé un premier moyen de réglage (5), de préférence une première soupape.

3. Simulateur de course d'actionnement selon la revendication 1 ou 2, **caractérisé en ce qu'**au simulateur de course d'actionnement est associée une source de pression (10) pour le fluide hydraulique, de préférence un accumulateur à haute pression, qui est relié à la chambre (3) du simulateur au moyen d'une seconde canalisation hydraulique (8) dans laquelle est disposé un second moyen de réglage (6) de préférence une seconde soupape.

4. Simulateur de course d'actionnement selon l'une des revendications 1 à 3, **caractérisé en ce que** la première et/ou la seconde soupape (5, 6) est une soupape fermée en l'absence de courant (SG), de préférence une soupape analogique ou une soupape de commutation rendue analogique.

5. Simulateur de course d'actionnement selon l'une des revendications 1 à 4, **caractérisé en ce qu'**au simulateur de course d'actionnement est associé un dispositif pour déterminer une force d'actionnement appliquée par le conducteur au dispositif d'actionnement, et une unité électronique de commande (13), qui commande le moyen de réglage en fonction die la force d'actionnement déterminée.

6. Simulateur de course d'actionnement selon l'une des revendications 1 à 5, **caractérisé en ce que** le simulateur de course d'actionnement est associé à un système de freinage de véhicule, comportant des freins de roues, qui peuvent être chargés avec une pression provenant de la source de pression et qui peuvent être reliés à la chambre hydraulique du simulateur par l'intermédiaire d'au moins une liaison hydraulique pouvant être bloquée à l'aide d'une soupape de sectionnement (14).

7. Procédé pour régler une caractéristique force - course définie d'un dispositif d'actionnement pour une installation de freinage de véhicule à l'aide d'un simulateur de course d'actionnement, qui comporte un piston hydraulique (4) de simulateur, qui est déplaçable au moyen d'un actionnement du dispositif d'actionnement et est disposé dans une chambre hydraulique (3) du simulateur, dans laquelle est disposé un fluide hydraulique,
**caractérisé en ce que** la caractéristique force - course du dispositif d'actionnement est réglée au moyen d'une évacuation commandée du fluide hydraulique depuis la chambre (3) ou une amenée commandée du fluide hydraulique dans la chambre.

8. Simulateur de course d'actionnement selon l'une des revendications 1 à 6 ou procédé selon la revendication 7, **caractérisé en ce que** le simulateur de course d'actionnement ou le procédé est utilisé pour un réglage d'une caractéristique force - course définie d'une pédale de frein (1) de véhicule automobile.

9. Simulateur de course d'actionnement ou procédé selon l'une des revendications 1 à 8, **caractérisé en ce que** le simulateur de course d'actionnement assume la fonction d'un générateur de pression de freinage d'urgence.
